# EUROPÄISCHE PATENTSCHRIFT

(11) **EP 4 010 410 B1**
(45) Veröffentlichungstag und Bekanntmachung des Hinweises auf die Patenterteilung: **14.06.2023**
(21) Anmeldenummer: 20734027.4
(22) Anmeldetag: 24.06.2020
(51) Int. Cl.: C08J 9/00, B29C 44/06, B29D 99/00, B29C 44/00

(54) **VERFAHREN ZUR HERSTELLUNG VON POLYMETHYLMETHACRYLAT-HARTSCHÄUMEN ALS KERNMATERIALIEN IN ROTORBLÄTTERN VON WINDKRAFTANLAGEN UND IM BOOTSBAU**
USE OF POLYMETHYLMETHACRYLATE RESIN FOAMS AS NUCLEAR MATERIALS IN ROTOR BLADES OF WIND POWER PLANTS AND IN THE CONSTRUCTION OF BOATS
UTILISATION DE MOUSSES DURES DE POLYMÉTHACRYLATE DE MÉTHYLE EN TANT QUE MATIÈRES NUCLÉAIRES DANS LES PALES DE ROTOR D'ÉOLIENNES ET DANS LA CONSTRUCTION DE BATEAUX

(30) Priorität: 08.08.2019 EP 19190719
(43) Veröffentlichungstag der Anmeldung: 15.06.2022
(73) Patentinhaber: Evonik Operations GmbH, 45128 Essen (DE)
(72) Erfinder: RICHTER, Thomas, 64293 Darmstadt (DE); SEIPEL, Christoph, 64832 Babenhausen (DE); MA JUNYONG, Vincent, 64295 Darmstadt (DE); BECKER, Florian, 64291 Darmstadt (DE); LANGEL, Lisa, 68165 Mannheim (DE)
(74) Vertreter: Evonik Patent Association
(86) Internationale Anmeldenummer: PCT/EP2020/067571
(87) Internationale Veröffentlichungsnummer: WO 2021/023432

(56) Entgegenhaltungen:
- EP-A1- 3 075 770
- DE-A1-102010 038 716
- KR-B1- 101 928 236
- US-A1- 2019 211 124

## Beschreibung

### Gebiet der Erfindung

Die Erfindung betrifft ein Verfahren zur Herstellung von Polymethylmethacrylat basierten Hartschäumen in Sandwichbauteilen zur Verwendung in Windkraftanlagen und dem Bootsbau mit einer Glasübergangstemperatur Tg über 110°C, ermittelt über DMTA Messung nach Norm ISO 6721-7, dadurch gekennzeichnet, dass die mit Treibmittel beladene Polymerisatzusammensetzung zu einem Schaummaterial mit einer mittleren Porengröße im Bereich von 50 bis 300 *µ*m, gemessen nach ASTM D3576, geschäumt wird.

### Stand der Technik

Sandwichcomposite bestehen aus einem Kernmaterial und darauf aufgebrachten Deckschichten. Im Allgemeinen zeichnen sich diese Sandwichcomposite dadurch aus, dass sie bei geringem Gewicht eine hohe Bauteilsteifigkeit aufweisen. Hierbei muss das Kernmaterial verschiedene Anforderungen erfüllen, z.B. muss es fest mit den Deckschichten verbunden sein, um Schubkräfte übertragen zu können. Weiterhin sollte das Kernmaterial eine möglichst geringe Dichte aufweisen.

Häufig genutzte Kernmaterialien sind Hartschaumstoffe auf Grund ihrer geringen Dichte.

Zur Herstellung der Sandwichkomposite wird normalerweise eine Deckschicht auf das Kernmaterial aufgebracht und mit Harz getränkt oder es werden mit Harz getränkte, aber noch nicht ausgehärtete Gewebematerialien aufgebracht (Prepreg). In einem zweiten Schritt wird dann das Harz in den Deckschichten ausgehärtet wobei auch die Anbindung an das Kernmaterial stattfindet. Die Aushärtung findet bei erhöhten Temperaturen und Drücken statt um die Deckschichten defektfrei vorliegen zu haben und eine gute Anbindung der Deckschicht an das Kernmaterial zu gewährleisten. Hierbei verbindet sich das Harz der Deckschichten durch verschiedene Mechanismen dem Kernmaterial. Es kann zu einer Adhäsion/Kohäsion oder chemischen Anbindung des Harzes an die Deckschichten kommen. Weiterhin kann das Harz, welches vor der Aushärtung noch eine gewisse Fließfähigkeit besitzt auch in oberflächlich offene Zellen des Schaumkerns fließen und somit nach der Aushärtung durch Formschluss zu einer Verbindung von Deckschicht und Kernmaterial führen ("Verzahnung").

Je höher die verwendeten Temperaturen und Drücke bei der Aushärtung der Deckschichten sind, desto schneller kann im Regelfall die Aushärtung stattfinden.

Die oben beschriebenen Sandwichcomposite finden verbreitet Anwendung im Bau von Flügeln von Windkraftanlagen sowie im Bootsbau. Die verwendeten Kernmaterialien in diesen Bereichen sind hauptsächlich Hartschaumstoffe auf Grund ihrer geringen Dichte. Insbesondere finden für diese Anwendungen PVC und PET basierte Schaumstoffe Verwendung. Beispiele hierfür sind AirexC70.55 (PVC), AirexT10.100 (PET) von 3A Composites, GPET115 (PET) von GURIT, Divinicell H von DIAB oder ArmaFORM (PET) von Armacell.

Wichtig ist hierbei, dass bestimmte Druckfestigkeiten und Wärmeformbeständigkeiten erreicht werden müssen um den Fertigungsprozess der Bauteile zu ermöglichen. Da die mechanischen Festigkeiten bei Schaumstoffen aus dem gleichen Basispolymer mit der Dichte abnimmt, sind abhängig vom Basispolymer der Schaumstoffe nur Dichten bis zu einer bestimmten unteren Grenze einsetzbar. Bei PET basierten Schaumstoffen liegt diese untere Grenze bei ca. der doppelten Dichte wie bei PVC basierten Schaumstoffen. Hier besitzen PVC basierte Schaumstoffe klare Vorteile gegenüber PET Schaumstoffen. Bezüglich der Kosten für die Kernmaterialen besitzen hingegen PET Schaumstoffe Vorteile gegenüber PVC Schaumstoffen.

EP 3075770 offenbart ein Verfahren gemäß dem Oberbegriff des Anspruchs 1. Es zeigt, dass neuartige, feinporige PMMA-Schaumstoffplatten mit sehr guten Eigenschaften hergestellt werden. Insbesondere feinporige PMMA-Schäume mit einer mittleren Porengröße kleiner 500 µm und einer Dichte kleiner 250 kg/m³ werden beschrieben.

Es wird kein Kernmaterial beschrieben, das bei geringer Harzaufnahme auch höhere Prozesstemperaturen erlaubt.

Ein weiterer Faktor für das finale Bauteilgewicht der Sandwichcomposite ist die Harzaufnahme der Schaumstoffe. Unter Harzaufnahme versteht man das Einfließen des noch flüssigen Harzes der Deckschichten vor der Aushärtung in oberflächlich offene Poren. Diese Harzaufnahme ist notwendig, damit es zu einem Formschluss und damit guter Anhaftung der Deckschichten an den Kernwerkstoff kommt. Es ist es vorteilhaft, dass nur die geringste, für eine gute Anbindung notwendige Menge an Harz von den obersten offenen Poren des Schaumstoffes aufgenommen wird, da das Harz durch seine hohe Dichte ansonsten unnötig zum Gesamtgewicht der finalen Bauteile beiträgt.

### Aufgabe

Wie oben beschrieben sind die standardmäßig in Rotorblättern von Windkraftanlagen sowie im Bootsbau verwendeten Kernmaterialien Hartschaumstoffe basierend auf PVC bzw. PET. Diese Hartschaumstoffe weisen jedoch teilweise deutliche Nachteile auf.

Ein Nachteil besteht bei beiden Schaumstoffen in der hohen Harzaufnahme. Diese führt dazu, dass unnötig viel Harz vom Schaumstoff aufgenommen wird, was auf der einen Seite zu unnötig hohen Kosten durch das verwendete Harz führt, auf der anderen Seite das finale Bauteilgewicht in die Höhe treibt.

Ein weiterer Nachteil von PET und PVC Schaumstoffen für diese Anwendungen ist, dass die möglichen Verarbeitungstemperaturen im Herstellprozess der Sandwichcomposite auf ca. 80°C begrenzt sind, da über diesen Temperaturen die mechanischen Eigenschaften der PET und PVC Hartschaumstoffe deutlich abnehmen und einen qualitativ hochwertigen Fertigungsprozess nicht mehr erlauben (Deformation des Kernmaterials).

Die Aufgabe war daher, ein Kernmaterial für die o.g. Anwendungen zu finden, welches a) eine geringere Harzaufnahme besitzt, um Kosten und Gewicht zu sparen sowie b) dieses gleichzeitig auch höhere Prozesstemperaturen erlaubt.

### Lösung

Gelöst wurde die Aufgabe durch das zur Verfügung stellen eines Verfahrens zur Herstellung von Polymethylmethacrylat basierten Hartschäumen in Sandwichbauteilen zur Verwendung in Windkraftanlagen und dem Bootsbau mit einer Glasübergangstemperatur Tg über 110°C, ermittelt über DMTA (dynamisch mechanisch thermische Analyse) Messung nach Norm ISO 6721-7 (Ausgabedatum 2005-08), dadurch gekennzeichnet, dass die mit Treibmittel beladene Polymerisatzusammensetzung zu einem Schaummaterial mit einer mittleren Porengröße im Bereich von 50 bis 300 *µ*m, gemessen nach ASTM D3576 (Ausgabedatum 2015), geschäumt wird.

Es wurde gefunden, dass Polymethylmethacrylat (PMMA) basierte Hartschaumstoffe die oben genannten Anforderungen an geringe Harzaufnahme sowie höhere Prozesstemperaturen im Vergleich zu den Konkurrenzsystemen PET und PVC Schäumen erfüllen. Besonders überraschend war hierbei, dass die Deckschichtanbindung trotz einer deutlich geringeren Harzaufnahme bei PMMA Schäumen sehr gut war.

Eine geringe Harzaufnahme mit weniger als 0,03 g/cm², gemessen nach VARI (Vacuum Assisted Resin Infusion), unterscheidet den erfindungsgemäßen Hartschaumstoff von den Konkurrenzsystemen auf PET und PVC Basis.

Mit der vorliegenden Erfindung werden PMMA basierte Schaumstoffe zur Verfügung gestellt, die eine gesamte Porengröße im Bereich von 50-300 µm und einer Dichte des Schaumstoffs von 30-500 kg/m³, bevorzugt kleiner 250 kg/m³, gemessen nach DIN EN ISO 1183 (Ausgabedatum 2013-04), aufweisen.

Ein geeignetes Verfahren zur Herstellung von PMMA-Schaumstoffen, bei dem die Herstellung der Schaumstoffe durch eine Polymerisation, wie zum Beispiel eine Plattenpolymerisation von Monomerrmischungen, enthaltend überwiegend MMA, bzw. eines Sirups aus einem überwiegend oder ganz aus MMA bestehenden Polymer und einer überwiegend oder ganz aus MMA zusammengesetzten Monomermischung in Gegenwart eines bei Polymerisationsbedingungen nichtgasförmigen Treibmittels und eines Nukleierungsmittels erfolgen, wird beispielsweise in der EP 3277748 beschrieben. In einem zweiten Schritt wird die so erhaltene, auspolymerisierte und mit Treibmittel beladene PMMA Platte dann durch Erwärmung aufgeschäumt, wobei durch die Zugabe des Nukleierungsmittels kleine und gleichmäßige Poren gebildet werden.

Dieses Verfahren ist insbesondere dadurch gekennzeichnet, dass es sich bei dem Nukleierungsmittel um Siliziumoxid-Partikel mit einem Durchmesser zwischen 4 und 1000 nm handelt. Die Zusammensetzung enthält dabei 0,01 bis 2,0 Gew%, bevorzugt 0,2 bis 1,5 Gew% eines oder mehrerer Initiatoren, 2 bis 20 Gew%, bevorzugt 3 bis 15 Gew% eines oder mehrerer Treibmittel, 0,2 bis 10 Gew%, bevorzugt 0,5 bis 8 Gew% der Siliziumoxid-Partikel mit dem Durchmesser zwischen 4 und 1000 nm , bevorzugt zwischen 5 und 500 nm und 70 bis 97,79 Gew%, bevorzugt 75 bis 97,8 Gew% einer Polymer-bildenden Mischung, wobei diese Polymer-bildenden Mischung zu mindesten 75 mol% aus Methylmethacrylat (MMA) bzw. MMA-Wiederholungseinheiten besteht und zu 0 bis 80 Gew%, bevorzugt zu 0 bis 50 Gew% als Polymer und/oder Oligomer vorliegen kann. Diese Zusammensetzung wird zunächst bei einer Temperatur zwischen 20 °C und 100 °C, bevorzugt zwischen 30 °C und 70 °C polymerisiert und anschließend bei einer Temperatur zwischen 130 °C und 250 °C, bevorzugt zwischen 150 °C und 230 °C geschäumt. Neben den genannten Komponenten kann die Zusammensetzung bis zu 27,79 Gew% weiterer Komponenten enthalten. Beispiele für diese weiteren Komponenten sind insbesondere weitere Polymerkomponenten, bei denen es sich nicht um MMA-haltige Polymere handelt, UV-Stabilisatoren, Füllstoffe und Pigmente.

Bei den Siliziumoxid-Partikeln handelt es sich bevorzugt um SiOz-Partikel. Jedoch ist es auch möglich, dass diese Partikel nicht genau die Stöchiometrie von 1 zu 2 aufweisen. So können insbesondere bei sehr kleinen Partikeln Abweichungen von der Stöchiometrie von bis zu 30% vorliegen. Auch kann Silizium zu bis zu 20% durch andere Metallionen, wie zum Beispiel Aluminium ersetzt sein. Erfindungsgemäß wichtig ist nur, dass das stöchiometrische Verhältnis von Silizium zu Sauerstoff zwischen 0,7 und 1,3 zu 2 liegt und dass es sich bei den nicht-Sauerstoffatomen im Partikel zu mindestens 80 mol% um Silizium handelt. Es können aber auch andere Nukleierungsmittel wie Talkum, Schichtsilikate, Graphene, Graphitoxid, Al₂O₃, nicht mischbare bzw. in der Monomermischung nicht lösbare Polymerpartikel und dergleichen Verwendung finden Wenn die Porengröße auch ohne Nukleierungsmittel im beschriebenen Bereich liegt, kann auf das Nukleierungsmittel zu verzichtet werden.

Die Polymer-bildenden Mischung kann neben dem MMA bis zu 25 Gew% weiterer Komponenten aufweisen. Bei diesen weiteren Komponenten kann es sich um mit MMA copolymerisierbare Monomere, Regler und/oder Vernetzer handeln. Dabei können das MMA und die copolymerisierbaren Monomere vollständig als Monomere eingesetzt werden. Die Polymer-bildenden Zusammensetzung kann insbesondere bis zu 0,5 Gew% Vernetzer und/oder bis zu 1,5 Gew% Regler enthalten.

In einer besser zu handhabenden Ausführungsform der Erfindung können das MMA und die copolymerisierbaren Monomere jedoch auch zu einem Anteil von bis zu 80 Gew%, bevorzugt zu maximal 50 Gew% als Polymer und/oder Oligomer vorliegen. Der Vorteil eines solchen Sirups, bestehend aus Monomeren und Polymeren bzw. Oligomeren, ist, dass dieser eine höhere Viskosität als eine reine Monomermischung aufweist und damit die Gesamtenergiemenge, die bei der Polymerisation freigesetzt wird, geringer ist.

Bei den mit MMA copolymerisierbaren Monomeren kann es sich insbesondere um Acrylate, wie insbesondere Methyl-, Ethyl-, Propyl- oder n-Butylacrylat handeln. Die Copolymerisation von Acrylaten stabilisiert den Schaumstoff insbesondere bei hohen Schäumungstemperaturen zusätzlich, da diese Schäumungstemperaturen oberhalb der Ceiling-Temperatur des reinen MMA liegen können. Für den Fall, dass keine stabilisierenden Comonomere eingebaut werden, ist eine kürzere Schäumungszeit oder eine entsprechend tiefere Schäumungstemperatur zu bevorzugen.

Weitere Beispiele für geeignete Comonomere sind (Meth)acrylsäure, Methacrylate, wie Ethylmethacrylat, Propylmethacryl, n-Butylmethacrylat, tert-Butyl(meth)acrylat, isoPropyl(meth)acrylat, iso-Butyl(meth)acrylat, Styrol, (Meth)acrylamid, ein N-Alkyl(meth)acrylamid mit ein bis 12 Kohlenstoffatomen in der Alkylgruppe, ein Hydroxylalkyl(meth)acrylat mit ein bis 4 Kohlenstoffatomen in der Alkylgruppe, ein Polyether(meth)acrylat, wobei der Polyether ein Molekulargewicht zwischen 200 und 5000 aufweisen kann. Die Comonomere können dabei auch als eine Mischung aus mindestens zwei dieser Comonomere vorliegen. Sollte es sich bei diesen Comonomeren um n-Butyl(meth)acrylat und/oder n-Propyl(meth)acrylat handeln, kann der Anteil dieser an der Gesamtzusammensetzung insgesamt 3 Gew% nicht überschreiten. Wenn Vernetzer eingesetzt werden, handelt es sich bei diesen bevorzugt um ein di-, tri- oder tetra-(Meth)acrylat, um Allyl(meth)acrylat, um Triallylcyanurat, um Triallylisocyanurat oder um eine Mischung, enthaltend mindestens zwei dieser Vernetzer.

Die Schreibweise (Meth)acrylat bedeutet hier sowohl Methacrylat, wie z.B. Methylmethacrylat, Ethylmethacrylat usw., als auch Acrylat, wie z.B. Methylacrylat, Ethylacrylat usw., sowie Mischungen aus beiden.

Wenn Regler eingesetzt werden, handelt es sich bei diesen bevorzugt um eine Verbindung mit ein bis fünf Mercaptangruppen, um ein γ-Terpinen oder um eine Mischung aus mindestens zwei dieser Regler. Besonders bevorzugt handelt es sich bei dem Regler um Penta-erithrit-tetrathioglycolat, 2-Mercaptoethanol, ein Alkylmercaptan mit 2 bis 12 Kohlenstoffatomen, Thyoclykolsäure, ein Thioglycolat, γ-Terpinen oder eine Mischung aus mindestens zwei dieser Regler.

Ein besonders wichtiger Aspekt der vorliegenden Erfindung ist die Verwendung der Nukleierungsmittel in der zu schäumenden Zusammensetzung. Diese gegenüber dem Stand der Technik neue Verwendung von Nukleierungsmitteln bei der Herstellung von PMMA-Schaumstoffen führt überraschend dazu, dass die PMMA-Schäume mit besonders kleinen und gleichmäßigen, sowie gleichmäßig verteilten Poren erhalten werden. Die so erhaltene Feinporigkeit ist für verschiedene Anwendungen von hoher Bedeutung. In

Isolationsanwendungen steigt gemeinhin bei gleicher Dichte und gleichem Zellgas die Isolationswirkung mit sinkender Porengröße eines Schaumstoffes. In Leichtbauanwendungen, in denen harzgetränkte Deckschichten auf einen Schaumkern aufgebracht werden, ist eine geringe Harzaufnahme des Schaumkernes zur Gewichtseinsparung von Bedeutung. Je feiner die Poren des hierfür verwendeten geschlossenzelligen Schaumstoffes sind, desto weniger Harz kann aufgenommen werden.

Es wurde überraschend gefunden, dass sich im Vergleich zu einem Schaum, welcher auf einer Basisrezeptur ohne Nukleierungsmittel basiert, ein deutlich feinporigerer Schaum erzielen lässt, wenn Siliziumoxid-Partikel eingesetzt werden. So kann zum Beispiel mit AEROSIL OX50 (der Firma EVONIK Industries AG) ein sehr feinporiger Schaum erhalten werden. Überraschender Weise wurde zudem gefunden, dass mit anderen, potentiell auch nukleierend wirkenden Additiven wie z.B. Talkumpulver, kein solcher Effekt erzielt wurde. Im Gegenteil wurde durch die Verwendung von Talkum ein Aufschäumen eher erschwert und es wurde ein sehr inhomogener Schaum erhalten. Auch der Einsatz von Al₂O₃-Partikeln (AEROXIDE ALU C der Fa. EVONIK Industries AG) lieferte keinen Erfolg, da ein Aufschäumen hier nicht möglich war. Dies zeigt, dass allein das Einbringen von beliebigen Partikeln in dem hier gezeigten Verfahren zur Herstellung von PMMA Schäumen, keine Porenverfeinerung im erwünschten Maß herbeiführt, sondern überraschend zunächst nur Siliziumoxid-Partikel dazu geeignet zu sein scheinen.

Weiterhin weisen die erfindungsgemäß hergestellten PMMA-Schaumstoffe eine überraschend hohe Festigkeit und gleichzeitig eine überraschend geringe Sprödigkeit auf und können daher z.B. Anwendung im Leichtbau finden. Weiterhin kann auf Grund der guten Materialeigenschaften auf den Einsatz von Weichmachern, wie z.B. längerkettigen Alkyl(meth)acrylaten oder Phthalaten, die sich nach bisherigen Erkenntnissen positiv auf die Fließfähigkeit bzw. die Schäumbarkeit auswirken, jedoch gleichzeitig die mechanischen Eigenschaften des PMMA-Schaumstoffes, insbesondere die Festigkeit, negativ beeinflussen, verzichtet werden.

Bei den insbesondere geeigneten Treibmitteln handelt es sich um tert-Butanol, n-Heptan, MTBE, Methylethylketon, einen Alkohol mit ein bis vier Kohlenstoffatomen, Wasser, Methylal, Harnstoff, iso-Propyl(meth)acrylat und/oder tert-Butyl(meth)acrylat. Dabei sind bei der Verwendung von isoPropyl(meth)acrylat und/oder tert-Butyl(meth)acrylat diese gleichzeitig Bestandteil der aufgeführten Monomerzusammensetzung und werden zunächst in die bei der Polymerisation gebildeten Polymere ganz oder teilweise einpolymerisiert. Bei der Schäumung werden darauf unter Abspaltung von Propen bzw. iso-Buten im Polymer (Meth)acrylsäure-Wiederholungseinheiten gebildet. In einer besonderen Ausführungsform können auch Polymere verwendet werden, die aus großen Anteilen dieser Monomere oder komplett aus diesen Monomeren hergestellt wurden. Durch die Verwendung solcher einpolymerisierbaren bzw. polymerisierten, Treibmittel freisetzende Comonomere ist es beispielsweise möglich, besonders kleine und regelmäßige Poren zu erhalten.

Besonders geeignete Treibmittel sind tert-Butyl(meth)acrylat, iso-Propyl(meth)acrylat, tert-Butanol, iso-Propanol, tert-Butylmethylether und Poly(tert-butyl(meth)acrylat).

Die Polymerisation erfolgt bevorzugt in einem formgebenden Gefäß, insbesondere in Form einer Kammerpolymerisation zwischen zwei Platten, wie z.B. Glasplatten. Dabei kann es sich beispielswiese im einfachsten Fall um eine rechteckige Wanne handeln. Durch die Polymerisation in einer solchen Wanne erhält man später eine Platte, deren Dicke durch den Füllstand der Wanne bzw. den Plattenabstand bestimmt wurde. Darüber hinaus sind jedoch auch komplexere Formen als Gefäß denkbar. Bevorzugt erfolgt die Polymerisation bei einer Temperatur zwischen 30 und 70 °C. Dabei können als Initiatoren neben allgemein bekannt Radikalstartern, wie zum Beispiel Peroxide oder Azoinitiatoren, auch Redoxsysteme oder UV-Initiatoren eingesetzt werden. Dabei betreffen die Polymerisationstemperaturen unterhalb von 40 °C insbesondere diese RedoxSysteme und UV-Initiatoren. Die UV-Initiatoren werden durch Bestrahlung mit entsprechendem UV-Licht initiiert, während es sich bei den Redox-Initatoren um Zweikomponentensysteme handelt, deren Initiierung durch Mischen der beiden Komponenten und der Monomere erfolgt.

Das Schäumen kann anschließend in dem gleichen Gefäß erfolgen, wobei die Volumenzunahme in diesem Fall auf eine Richtung, die offene Seite des Gefäßes beschränkt wird. Das polymerisierte Material kann jedoch auch freiliegend aufgeschäumt werden. Bevorzugt erfolgt das Schäumen in einem Ofen. Alternativ ist es auch möglich, das Schäumen durch Bestrahlung mit IR-Strahlung, insbesondere mit einer Wellenlänge zwischen 0,78 und 2,20, bevorzugt zwischen 1,20 und 1,40 µm, zu bewirken. Eine weitere Alternative stellt das Aufschäumen mit Mikrowellen dar. Auch die Kombination aus verschiedenen Methoden, wie IR-Strahlung, Mikrowellen und/oder Heizen in einem Ofen ist denkbar.

Sowohl das Schäumen als auch die zuvor erfolgte Polymerisation können jeweils in mehreren Temperaturstufen erfolgen. Bei der Polymerisation kann durch eine spätere Erhöhung der Temperatur zusätzlich der Umsatz gesteigert und der Restmonomergehalt damit verringert werden. Beim Schäumen kann durch eine stufenweise Erhöhung der Schäumungstemperatur die Porenverteilung, die Porengröße und die Anzahl der Poren beeinflusst werden.

Optional kann das Verfahren auch derart durchgeführt werden, dass die Polymerisation nur unvollständig, in diesem Fall bevorzugt zu einem Umsatz von mindestens 80% durchgeführt wird und die endgültige Auspolymerisation beim Schäumen erfolgt. Ein solches Verfahren hat den Vorteil, dass zu Beginn des Schaumvorgangs die verbliebenen Monomere einen weichmachenden Effekt haben, ohne dass im fertigen Schaumstoff eine weichmachende Verbindung verbleiben würde. Somit würde bei einer solchen Ausführungsform die Polymerisation und das Schäumen teilweise - bei einer Schäumungstemperatur- simultan erfolgen.

Neben dem erfindungsgemäßen Verfahren sind auch PMMA-Schaumstoffe, die über ein solches Verfahren beispielsweise herstellbar sind, Bestandteil der vorliegenden Erfindung. Ein solcher PMMA-Schaumstoff ist dabei dadurch gekennzeichnet, dass der Feststoffanteil dieses Schaums 72 bis 98 Gew% eines Polymers, aufweisend mindestens 75 mol% MMA-Wiederholungseinheiten, und 0,2 bis 12,5 Gew% Siliziumoxid-Partikel aufweist. Weiterhin weist der Schaumstoff eine Dichte zwischen 25 und 250 kg/m³, bevorzugt zwischen 40 und 250 kg/m³, gemessen nach DIN EN ISO 1183,_und eine durchschnittliche Porengröße kleiner 500 µm auf. Bevorzugt ist die gesamte Porengröße kleiner 500 µm.

Die Porengröße wird in Anlehnung an die Norm ASTM D 3576 mit folgenden Abweichungen von dieser Norm bestimmt: Zunächst wird kein Messerschnitt des PMMA-Schaumstoffs, sondern eine Bruchkante desselben betrachtet. Weiterhin erfolgt die Auswertung aufgrund der relativ kleinen Poren nicht mittels eines Lichtmikroskops, sondern über eine REM-Messung. Die Berechnung der Porengröße aus den erhaltenen Bildern ist dabei aber Normgerecht.

Bevorzugt sind insbesondere PMMA-Schaumstoffe, in denen das Polymer aus MMA, einem Initiator, einem oder mehreren Vernetzern, ausgewählt aus di-, tri- oder tetra-(Meth)acrylaten, Allyl(meth)acrylat, Triallylcyanurat und/oder Triallylisocyanurat, und einem oder mehreren Reglern gebildet wurde.

Die PMMA basierten Schaumstoffe zeigen eine Harzaufnahme von 0,01 und 0,03 g/cm², bevorzugt bei 0.02 g/cm² im Vergleich zu typischen PET und PVC Schäumen, deren Harzaufnahme bei 0,03-0,06 g/cm² liegt, gemessen nach VARI.

Gleichzeitig ist die Deckschichtanhaftung hervorragend. Dies ist überraschend, da auf Grund der vergleichsweise kleinen Poren und der damit einhergehenden potentiell schlechteren "Verzahnung" von Schaum und ausgehärtetem Harz, keine gute Deckschichtanhaftung zu erwarten war.

Weiterhin wurde gefunden, dass PMMA basierte Schaumstoffe eine höhere Glasübergangstemperatur als PVC und PET Schäume aufweisen. Die Glasübergangstemperaturen für PMMA basierte Schaumstoffe, ermittelt über DMTA Messung nach Norm ISO 6721-7, beträgt mindestens 110°C, bevorzugt mindestens 130°C. Dies wiederum erlaubt höhere Temperaturen beim Aushärtungsprozess wodurch Prozesszeiten verkürzt und damit kostengünstiger gestaltet werden können. Es wurde gefunden, dass die Aushärtung des Harzes bei der Herstellung von Sandwichbauteilen bei Temperaturen größer 110°C, bevorzugt größer 120°C, durchgeführt werden kann. Dies ist bei herkömmlichen Schäumen nicht möglich, da bei diesen Temperaturen bereits eine Dekomposition und/oder Erweichung stattfindet.

Die Aushärtung des Harzes bei der Herstellung der Sandwichbauteile bei Temperaturen >110 °C erfolgt durch Aufheizen des Werkzeugs oder Bestrahlung.

Die Aushärtung des Harzes kann in einem elektrisch beheizbaren Werkzeug, oder mit einem Fluid (beispielsweise Dampf) durchströmten Werkzeug erfolgen.

Die Aushärtung des Harzes mittels Bestrahlung erfolgt durch IR-Strahlung oder Mikrowelle. Weiterhin ist es möglich, die erfindungsgemäßen Sandwichbauteile unter erhöhtem Druck herzustellen. Dabei werden Pressprozesse oder Autoklavenprozesse genutzt. Dabei werden in die Form die Gewebelage eingelegt, der Schaumkern aufgelegt und eine weitere Gewebelage aufgelegt Je nach Verfahrensvariante wird Druck ≥1 bar beaufschlagt oder ein Vakuum angelegt und das Harz injiziert bzw. eingesaugt.

Die Polymethylmethacrylat basierten Hartschäume können in Sandwichmaterialien eingesetzt werden, an die besondere Anforderungen bezüglich des Gewichts gestellt werden. Die verringerte Harzaufnahme führt zu einem geringen Gewicht, was dazu führt, dass die damit hergestellten Sandwichmaterialien besonders gut für Anwendungen geeignet sind, bei denen eine gute Verbundhaftung bei geringem Gewicht gefordert sind. Dies führt außerdem zu geringeren Kosten in Bezug auf den Verbrauch der genutzten Harze. Weiterhin erlauben die untersuchten PMMA Schäume durch die höheren Wärmeformbeständigkeiten potentiell höhere Prozesstemperaturen und damit Prozesszeiteinsparungen.

Die Polymethylmethacrylat basierten Hartschäumen eignen sich als witterungsbeständige Isolationsmaterialien, Kernmaterial für Sandwich Composites, im Leichtbau, als Verpackungsmaterial, als Energieabsorber in Crashelementen, in architektonischen Bauelementen, als Diffusor in lichttechnischen Anwendungen, im Möbelbau, im Bootsbau, im Fahrzeugbau, in der Luftfahrtindustrie oder im Modellbau, insbesondere als Kernmaterial in Rotorblättern in Windkraftanlagen.

### Ausführungsbeispiele

### Harzaufnahme

### Verwendete Materialien:

PVC Schaum: Airex C70.55 der Firma 3A Composites, Steinhausen ZG (Schweiz)
PET Schaum: Airex T10.100 der Firma 3A Composites, Steinhausen ZG (Schweiz)
PMMA Schaum: ROHACRYL55 der Firma Evonik Resource Efficiency GmbH, Deutschland

Die Harzaufnahme der Kernwerkstoffe muss experimentell mittels VARI (Vacuum Assisted Resin Infusion) bestimmt werden. Für die Messungen werden Mindestmaße für die Probenplatten von 300 x 300 mm festgelegt.

Vor der Infusion müssen die Probenabmessungen und Probengewichte auf eine Messgenauigkeit von ± 0,01 mm und ± 0,01 g justiert werden, um die Probendichte und das Flächengewicht zu ermitteln. Da die Viskosität des Harzes stark von der Temperatur abhängig ist, wird der Versuchsaufbau auf 30 °C vorgewärmt um eine konstante Bedingung zu gewährleisten. Die Dichtigkeit des Versuchsaufbaus wird per Vakuumtest geprüft, wobei die An- und Ausgüsse abgeklemmt werden und nach 30 min der Vakuumverlust kontrolliert wird.

Weiterhin sollten die Harzkomponenten entgast werden. Dies erfolgt durch die Evakuierung des Harzes und Härters im Vakuum bei -0,8 bar und 40°C für 60 min. Vor der Vermischung müssen beide Komponenten auf Raumtemperatur abgekühlt werden, damit die Reaktion kontrolliert gestartet werden kann. Anschließend wird eine zweite Entlüftung des Harzsystems bei -0,8 bar und 40°C für 10 min durchgeführt. Wenn der Vakuumtest des Versuchsaufbaus abgeschlossen ist, kann die Infusion starten. Das Vakuum sollte solange gezogen werden, bis das Harz sich verfestigt hat. Nach Abschluss der Infusion sollte das Harzsystem bei 30 °C für mindestens 18 Stunden aushärten.

Am Schluss werden die Ränder rechtwinklig zurechtgeschnitten und die Peel-plys abgezogen. Die Differenz aus dem Flächengewicht der trockenen und der injizierten Schaumplatte ergibt die Harzaufnahme.

Die erhaltenen Werte für die Harzaufnahme sind in folgender Tabelle dargestellt:

| Schaum | Harzaufnahme (g/cm²) |
|---|---|
| PMMA Schaum | 0,0196 |
| PET Schaum | 0,0591 |
| PVC Schaum | 0,0370 |

### Deckschichtanhaftung

In Anlehnung an den Standardtest Trommel-Schälversuch (DIN 53295) wird eine Sandwichplatte mit einem Überstand der Deckschicht in den bekannten Versuchsaufbau eingespannt. Mit einem Greifer wird die Deckschicht am Überstand gegriffen und mit einer konstanten Maschinengeschwindigkeit vom Kernmaterial abgezogen. Die dazu erforderliche Kraft wird aufgezeichnet. Sie gibt Auskunft über Deckschichtanhaftung.

In den durchgeführten Versuchen kam es zum Versagen des Schaummaterials. Dass das kohäsive Versagen statt des adhäsiven Versagens (die Trennung von Schaumkern und Deckschicht in der Klebeschicht (Harzschicht) erfolgt, ist ein Merkmal für eine gute Deckschichtanhaftung.

Damit wird eine ausreichende Deckschichtanhaftung am PMMA-Schaumkern nachgewiesen.

In einem anderen Testverfahren wird auch die Deckschichtanhaftung gemessen.

Der Kopfzugversuch (ASTM C297) geht von 50 x 50 mm Probekörpern aus. Der Probekörper besteht aus einem Schaumkern einer Harzschicht und einer Deckschicht auf der Ober- und der Unterseite. Der Probenkörper wird in die Zugvorrichtung eingespannt. Mit konstanter Zuggeschwindigkeit wird die obere Halterung gezogen.

In den durchgeführten Versuchen wurde bis zum Versagen des Schaumkerns gezogen. Es konnte keine Ablösung der Deckschicht vom Kernmaterial an der Harzschicht nachgewiesen werden.

Damit wird eine ausreichende Deckschichtanhaftung nachgewiesen.

### Messung der Glasübergangstemperatur zur Abschätzung der Wärmeformbeständigkeit

Tg Werte wurde ermittelt über DMTA Messungen nach der Norm ISO 6721-7. Folgende Werte wurden gefunden:

| Schaum | T_{g} (°C) |
|---|---|
| PMMA Schaum | 145 |
| PET Schaum | 80 |
| PVC Schaum | 80 |

### Aushärtung bei erhöhter Temperatur

Der Schaumkern wird mit den Deckschichten versehen mit einem Epoxidharz injiziert. In dem geschlossenen Werkzeug wird das Material auf 110°C aufgeheizt. Die Vernetzung wird durch die erhöhte Temperatur beschleunigt.

Es wurden relativ kurze Taktzeiten ermittelt. Bei Vergleichsversuchen, die bei Raumtemperatur durchgeführt wurden, betrug die Aushärtungszeit über 24 h. Der Aushärtungsprozess konnte hier bei einer Temperatur von 110°C auf 20 min verkürzt werden.

## Patentansprüche

1. Verfahren zur Herstellung von Polymethylmethacrylat basierten Hartschäumen in Sandwichbauteilen zur Verwendung in Windkraftanlagen und dem Bootsbau wobei die mit Treibmittel beladene Polymerisatzusammensetzung zu einem Schaummaterial mit einer mittleren Porengröße im Bereich von 50 bis 300 *µ*m, gemessen nach ASTM D3576, geschäumt wird, **dadurch gekennzeichnet, dass** das Polymethylmethacrylat eine Glasübergangstemperatur Tg über 110°C, ermittelt über DMTA Messung nach Norm ISO 6721-7, aufweist.

2. Verfahren zur Herstellung von Polymethylmethacrylat basierten Hartschäumen gemäß Anspruch 1, **dadurch gekennzeichnet, dass** die Harzaufnahme des Schaummaterials zwischen 0,01 und 0,03 g/cm², gemessen nach VARI, beträgt.

3. Verfahren zur Herstellung von Polymethylmethacrylat basierten Hartschäumen gemäß Anspruch 1, **dadurch gekennzeichnet, dass** die Aushärtung des Harzes bei der Herstellung der Sandwichbauteile bei Temperaturen >110 °C durch Aufheizen oder Bestrahlung in einem Werkzeug durchgeführt wird.

4. Verfahren zur Herstellung von Polymethylmethacrylat basierten Hartschäumen gemäß Anspruch 3, **dadurch gekennzeichnet, dass** die Aushärtung des Harzes in einem elektrisch beheizbaren Werkzeug erfolgt.

5. Verfahren zur Herstellung von Polymethylmethacrylat basierten Hartschäumen gemäß Anspruch 3, **dadurch gekennzeichnet, dass** die Aushärtung des Harzes mittels IR-Strahlung durchgeführt wird.

6. Verfahren zur Herstellung von Polymethylmethacrylat basierten Hartschäumen gemäß der Ansprüche 1 bis 5, **dadurch gekennzeichnet, dass** das Schaummaterial eine Dichte von 30-500 kg/m³, gemessen nach DIN EN ISO 1183, aufweist.

7. Verwendung von Polymethylmethacrylat basierten Hartschäumen in Sandwichbauteilen hergestellt gemäß der Ansprüche 1 bis 6, wobei der Schaum als Kernmaterial in Rotorblättern von Windkraftanlagen oder im Bootsbau, im Leichtbau, als Verpackungsmaterial, als Energieabsorber in Crashelememten, in architektonischen Bauelementen, als Diffusor in lichttechnischen Anwendungen, im Möbelbau, im Fahrzeugbau, in der Luftfahrtindustrie oder im Modellbau eingesetzt werden.

## Claims

1. Process for producing polymethyl methacrylate-based rigid foams in sandwich components for use in wind power plants and boatbuilding, wherein the blowing agent-laden polymer composition is foamed to afford a foam material having an average pore size in the range from 50 to 300 µm, measured according to ASTM D3576, **characterized in that** the polymethyl methacrylate has a glass transition temperature Tg above 110°C, determined by DMTA measurement according to the standard ISO 6721-7.

2. Process for producing polymethyl methacrylate-based rigid foams according to Claim 1, **characterized in that** the resin absorption of the foam material is between 0.01 and 0.03 g/cm², measured according to VARI.

3. Process for producing polymethyl methacrylate-based rigid foams according to Claim 1, **characterized in that** the curing of the resin during production of the sandwich components is performed at temperatures greater than 110°C by heating or irradiating in a mould.

4. Process for producing polymethyl methacrylate-based rigid foams according to Claim 3, **characterized in that** the curing of the resin is effected in an electrically heatable mould.

5. Process for producing polymethyl methacrylate-based rigid foams according to Claim 3, **characterized in that** the curing of the resin is performed by means of IR radiation.

6. Process for producing polymethyl methacrylate-based rigid foams according to Claims 1 to 5, **characterized in that** the foam material has a density of 30-500 kg/m³, measured according to DIN EN ISO 1183.

7. Use of polymethyl methacrylate-based rigid foams in sandwich components produced according to Claims 1 to 6, wherein the foam is employed as the core material in rotor blades of wind power plants or in boatbuilding, in lightweight construction, as packaging material, as energy absorbers in crash elements, in architectural building elements, as a diffuser in lighting applications, in furniture construction, in vehicle construction, in the aerospace industry or in model building.

## Revendications

1. Procédé de fabrication de mousses rigides à base de poly(méthacrylate de méthyle) dans des composants sandwich pour utilisation dans des installations éoliennes et en construction navale, la composition de polymères chargée d'un agent porogène subissant une expansion pour donner un matériau mousse ayant une grosseur moyenne de pore dans la plage de 50 à 300 µm, mesurée selon ASTM D3576, **caractérisé en ce que** le poly(méthacrylate de méthyle) présente une température de transition vitreuse Tg supérieure à 110 °C, mesurée par mesure par DMTA selon la norme ISO 6721-7.

2. Procédé de fabrication de mousses rigides à base de poly(méthacrylate de méthyle) selon la revendication 1, **caractérisé en ce que** l'absorption de résine par le matériau mousse est comprise entre 0,01 et 0,03 g/cm², mesurée par VARI.

3. Procédé de fabrication de mousses rigides à base de poly(méthacrylate de méthyle) selon la revendication 1, **caractérisé en ce que** le durcissement de la résine, lors de la fabrication des composants sandwich, est réalisé à des températures > 110 °C par montée en température ou irradiation dans un moule.

4. Procédé de fabrication de mousses rigides à base de poly(méthacrylate de méthyle) selon la revendication 3, **caractérisé en ce que** le durcissement de la résine a lieu dans un moule à chauffage électrique.

5. Procédé de fabrication de mousses rigides à base de poly(méthacrylate de méthyle) selon la revendication 3, **caractérisé en ce que** le durcissement de la résine est réalisé par irradiation IR.

6. Procédé de fabrication de mousses rigides à base de poly(méthacrylate de méthyle) selon les revendications 1 à 5, **caractérisé en ce que** le matériau mousse présente une masse volumique de 30 à 500 kg/m³, mesurée selon DIN EN ISO 1183.

7. Utilisation de mousses rigides à base de poly(méthacrylate de méthyle) dans des composants sandwich, fabriquées selon les revendications 1 à 6, la mousse étant utilisée comme matériau de cœur dans des pales de rotor, comme absorbeur d'énergie dans des éléments de collision, dans des composants architectoniques, comme diffuseur dans des applications en éclairagisme, dans la fabrication de meubles, en construction automobile, dans l'industrie aéronautique ou dans la construction de modèles.
